# EUROPEAN PATENT SPECIFICATION

(11) **EP 1 679 540 B1**
(45) Date of publication and mention of the grant of the patent: **07.07.2010**
(21) Application number: 04793139.9
(22) Date of filing: 28.10.2004
(51) Int. Cl.: G02B 21/00, G02B 21/26, G02B 7/02, G02B 21/33, G01N 21/95

(54) **DEVICE FOR MOVING SOLID IMMERSION LENS AND MICROSCOPE WITH THE SAME**
EINRICHTUNG ZUM BEWEGEN EINER FESTIMMERSIONSLINSE UND MIKROSKOP DAMIT
DISPOSITIF DE DEPLACEMENT DE LENTILLE A IMMERSION SOLIDE ET MICROSCOPE EQUIPE DE CETTE LENTILLE

(30) Priority: 31.10.2003 JP 2003372777
(43) Date of publication of application: 12.07.2006
(73) Proprietor: HAMAMATSU PHOTONICS K. K., Hamamatsu-shi, Shizuoka 435-8558 (JP)
(72) Inventor: TANABE, Hiroshi, c/o Hamamatsu Photonics K.K., Hamamatsu-shi, Shizuoka 4358558 (JP); ARATA, Ikuo, c/o Hamamatsu Photonics K.K., Hamamatsu-shi, Shizuoka 4358558 (JP)
(74) Representative: Frost, Alex John
(86) International application number: PCT/JP2004/016031
(87) International publication number: WO 2005/043214

(56) References cited:
- WO-A-98/58288
- WO-A-02/093232
- WO-A1-03/046593
- DE-U1- 9 415 219
- JP-A- 11 259 884
- JP-A- 2001 189 359
- JP-A- 2001 319 363
- JP-A- 2002 503 801
- JP-A- 2002 536 775
- JP-A- 2003 260 581
- US-A- 5 793 524
- US-A1- 2003 193 345

## Description

### Technical Field

This invention relates to a solid immersion lens moving device for moving a solid immersion lens and also relates to a microscope using this solid immersion lens moving device.

### Background Art

A solid immersion lens (SIL) is known as a lens for magnifying an image of an observed object. This solid immersion lens has a hemispherical shape or a hyperhemispherical shape, called a Weierstrass sphere, and is a microlens with a size of approximately 1mm to 5mm. When this solid immersion lens is used, since both the numerical aperture NA and the magnification are increased, observation at high spatial resolution is enabled.

As a solid immersion lens moving device for moving a solid immersion lens to an observation position of an observed object in order to carry out observation using this solid immersion lens, there is known a device, which performs X-Y movements of a holding box, holding a solid immersion lens, by means of X-Y actuators (see, for example, Document 1: US 2003/0098692A1). There is also known a device, which performs X-Y-Z movements of a cantilever, holding a solid immersion lens, by means of piezo elements (see, for example, Document 2: Japanese Patent Application Laid-Open No. 2001-189359).
Patent Document 1: US 2003/0098692A1
Patent Document 2: Japanese Patent Application Laid-Open No. 2001-189359

### Disclosure of the Invention

### Problems to be Solved by the Invention

However, with the former art wherein X-Y movements of a holding box are carried out by means of X-Y actuator, as is generally pointed out with X-Y actuators, component parts are required to be made long in the orthogonal X and Y directions and since the occupied area thus becomes large, compactness cannot be achieved. With the latter art wherein X-Y-Z movements of a cantilever are carried out by means of piezo elements, since large strokes cannot be achieved, an X-Y-Z stage is provided separately at the observed object side, and thus the cost is high.

This invention has been made to resolve such problems, and an object thereof is to provide a solid immersion lens moving device, with which compactness can be realized while realizing low cost, and a microscope equipped with the same.

### Means for Solving the Problem

This invention provides in a solid immersion lens moving device, which moves a solid immersion lens within an X-Y plane that is substantially parallel to an observed object, a solid immersion lens moving device comprising: a first arm member, being connected to a solid immersion lens holder that supports the solid immersion lens; a first arm member rotation source, rotating this first arm member within the X-Y plane; a second arm member, holding this first arm member rotation source; and a second arm member rotation source, having a rotation axis at a position that is non-coaxial to the rotation axis of the first arm member rotation source and rotating the second arm member within the X-Y plane.

With such a solid immersion lens moving device, the second arm member and the first arm member rotation source, which is held by the second arm member, are rotated within the X-Y plane that is substantially parallel to the observed object by the second arm member rotation source. Also, by the first arm member rotation source, the rotation axis of which is positioned non-coaxially to the rotation axis of the second arm member rotation source, the first arm member, to which is connected the solid immersion lens holder that supports the solid immersion lens, is rotated within the X-Y plane. Since the solid immersion lens is thus moved to a desired position within the X-Y plane by the rotation of two arm members, there is no need to make the component parts long in the orthogonal X and Y directions and a simple arrangement that occupies a small area is provided.

Here, a Z-direction movement source, for moving the second arm member rotation source in a Z-direction that is orthogonal to the X-Y plane, is preferably equipped. In this case, the solid immersion lens can be moved freely to a desired position in three-dimensional directions by the solid immersion lens moving device.

Also, an optical coupling material supplying means, for supplying an optical coupling material for optically coupling the solid immersion lens to the observed object, is preferably equipped. In this case, light flux of high numerical aperture (NA) can be transmitted. The inherent resolution of the solid immersion lens can thereby be exhibited.

Also, a drying gas supplying means, for supplying a gas for drying the optical coupling material, is preferably equipped. In this case, the drying of the optical coupling material is promoted, thereby enabling observation to be carried out immediately.

The solid immersion lens holder may also be equipped with an arm part, which extends outwards, and this arm part may be arranged to be detachably connected to the first arm member. In this case, exchange of the lens together with the arm part is enabled for lens exchange and lens exchange is thus facilitated since there is no need to handle a minute solid immersion lens. An arrangement is also possible wherein the first arm member is detachably connected to the first arm member rotation source.

Also, the second arm member is preferably arranged to have a curved form. In this case, the second arm member can be kept away readily from the field of view of the observed object.

Also, the solid immersion lens holder may be arranged to have a cylindrical form, with which the inner diameter is large in comparison to the outer diameter of the solid immersion lens, and be arranged so that the solid immersion lens is positioned within the inner periphery of the solid immersion lens holder with the bottom surface of the solid immersion lens protruding from an opening in the bottom surface of the solid immersion lens holder. In this case, the solid immersion lens is moved to a desired observation position by being moved in a sliding manner across the observed object while being hitched onto the inner peripheral surface of the solid immersion lens holder that moves within the X-Y plane. By then moving the solid immersion lens holder or the observed object in the Z-direction and then further moving the solid immersion lens holder within the X-Y plane and thus away from the solid immersion lens, observation can be carried out with all component parts being moved away from the field of view of the observed object.

Also, a microscope, for observing the observed object through the solid immersion lens, is preferably equipped and the above-described solid-immersion lens moving device is preferably mounted detachably to this microscope. This arrangement is convenient for performing observation upon removing the solid immersion lens moving device, for performing observation upon mounting another lens moving device, etc.

Also, this invention provides in a microscope, which is equipped with a solid immersion lens moving device and is for performing observation of a sample in order to obtain internal information on the sample, a microscope comprising: an optical system, including an objective lens, onto which light from a sample that is to be an observed object is made incident, and guiding an image of the sample; and the above-described solid immersion lens moving device; and **characterized in that** the solid immersion lens moving device moves the solid immersion lens between an inserted position, which contains an optical axis from the sample to the objective lens; and a standby position, which is located away from the optical axis.

With such a microscope equipped with a solid immersion lens moving device, the solid immersion lens is moved between an inserted position, which contains the optical axis from the sample to the objective lens, and a standby position, which is located away from the optical axis, by the solid immersion lens moving device. Both an observation image, which is taken in the normal state in which the solid immersion lens is not set between the sample and the objective lens, and a magnified observation image, which is taken in the state in which the solid immersion lens is inserted, can thus be acquired. By thus using the solid immersion lens moving device, an observation image and a magnified observation image can be acquired readily when both images are required and observation of higher resolution is enabled by means of the magnified observation image.

With this invention, "internal information" shall, for example in cases where electronic devices are to be the samples, include the circuit patterns of electronic devices as well as emission of weak light from electronic devices. Such weak light emissions include those caused by an abnormal position due to a defect of an electronic device, transient light emission that accompanies the switching operation of a transistor inside an electronic device, etc. The generation of heat due to a defect of an electronic device is also included.

Also, the microscope may have an arrangement equipped with an image acquisition means for acquiring images of a sample that is to be the observed object. In this case, the optical system is arranged to guide a sample image to the image acquisition means.

The above-described microscope can be used favorably as an electronic device inspection device. In this case, the electronic device inspection device is that which acquires an image of an electronic device for inspection of internal information on the electronic device, and this electronic device inspection device preferably comprises: an image acquisition means, acquiring an image of the electronic device that is to be the observed object; an optical system, including an objective lens, onto which light from the electronic device is made incident, and guiding the image of the electronic device to the image acquisition means; and the above-described solid immersion lens moving device; and preferably the solid immersion lens moving device moves the solid immersion lens between an inserted position, which contains an optical axis from the electronic device to the objective lens; and a standby position, which is located away from the optical axis.

With such an electronic device inspection device equipped with a solid immersion lens moving device, the solid immersion lens is moved between an inserted position, which contains the optical axis from the electronic device to the objective lens and a standby position, which is located away from the optical axis, by the solid immersion lens moving device. Both an observation image, which is taken in the normal state in which the solid immersion lens is not set between the electronic device and the objective lens, and a magnified observation image, which is taken in the state in which the solid immersion lens is inserted, can thus be acquired. By thus using the solid immersion lens moving device, an observation image and a magnified observation image can be acquired readily when both images are required and observation of higher resolution is enabled by means of the magnified observation image.

### Effects of the Invention

As described above, with this invention's solid immersion lens moving device, since the solid immersion lens is moved to desired positions within the X-Y plane by the rotation of two arm members, thus providing a simple arrangement that occupies a small area with which there is no need to make the component parts long in the orthogonal X and Y directions, compactness of the device can be achieved while realizing low cost. Also with a microscope (for example an electronic device inspection device) equipped with this solid immersion lens moving device, since in addition to providing the effects of the solid immersion lens moving device, both an observation image and a magnified observation image can be acquired readily when both types of images are required and since high-resolution observation is enabled by the magnified observation image, electronic device inspection and other forms of sample observation can be carried out readily and yet at high precision.

### Brief Description of the Drawings

[FIG 1] Fig. 1 is a block diagram showing an electronic device inspection device equipped with a solid immersion lens moving device of an embodiment of this invention.
[FIG 2] Fig. 2 is a perspective view of a solid immersion lens moving device and an objective lens as viewed from above.
[FIG 3] Fig. 3 is a perspective view of the solid immersion lens moving device and the objective lens as viewed from below.
[FIG 4] Fig. 4 is a perspective view of a lower part of the solid immersion lens moving device and the objective lens as viewed from below from a different viewpoint from that of Fig. 3.
[FIG 5] Fig. 5 is a bottom view of the solid immersion lens moving device and the objective lens in the state wherein a solid immersion lens is positioned at a standby position.
[FIG. 6] Fig. 6 is a bottom view of the solid immersion lens moving device and the objective lens in the state wherein the solid immersion lens is positioned at an inserted position or a closely contacting position.
[FIG 7] Fig. 7 is a bottom view of the solid immersion lens moving device and the objective lens in the state wherein the solid immersion lens is positioned at an exchange position.
[FIG 8] Fig. 8 is a perspective view showing the solid immersion lens holder.
[FIG 9] Fig. 9 is a vertical section showing the solid immersion lens holder in the state in which the lens is set at the standby position.
[FIG 10] Fig. 10 is a vertical section showing the solid immersion lens holder in the state in which the lens is set at the closely contacting position.
[FIG 11] Fig. 11 is a perspective view showing a part at which an arm part of the solid immersion lens holder and a first arm member of the solid immersion lens moving device are connected.
[FIG 12] Fig. 12 is a perspective view showing the state prior to connection of the arm part of the solid immersion lens holder and the first arm member of the solid immersion lens moving device as viewed from the front.
[FIG 13] Fig. 13 is a perspective view showing the state prior to connection of the arm part of the solid immersion lens holder and the first arm member of the solid immersion lens moving device as viewed from the rear.
[FIG 14] Fig. 14 is a block diagram showing the solid immersion lens moving device and the objective lens along with an optical coupling material supplying means and a drying gas supplying means.
[FIG 15] Fig. 15 is a block diagram specifically showing the optical coupling material supplying means.
[FIG. 16] Fig. 16 is a block diagram specifically showing the drying gas supplying means.
[FIG 17] Fig. 17 is a perspective view showing a solid immersion lens holder used in another embodiment of this invention.
[FIG 18] Fig. 18 is a vertical section showing the solid immersion lens holder in the state in which a lens is set at the closely contacting position.
[FIG 19] Fig. 19 is a perspective view showing a part at which the solid immersion lens holder is connected to a solid immersion lens moving device.
[FIG 20] Fig. 20 is a perspective view showing another solid immersion lens holder.
[FIG. 21] Fig. 21 is a vertical section showing the other solid immersion lens holder in the state wherein a lens is positioned at a closely contacting position.

### Description of Symbols

1- electronic device inspection device, 2 - optical system, 3 - solid immersion lens, 4 - microscope, 5, 64 - solid immersion lens holder, 7 - solid immersion lens holder arm part, 10, 12 - image acquisition means, 20 - objective lens, 30 - solid immersion lens manipulator (solid immersion lens moving device), 71 - first arm member, 72 - first arm member rotation source, 72a - first arm member rotation source rotation axis, 73 - second arm member, 74 - second arm member rotation source, 74a - second arm member rotation source rotation axis, 75 - Z-direction movement source, 80 - optical coupling material supplying means, 90 - drying gas supplying means, 99 - connecting part, S - semiconductor device (observed object).

### Best Modes for Carrying Out the Invention

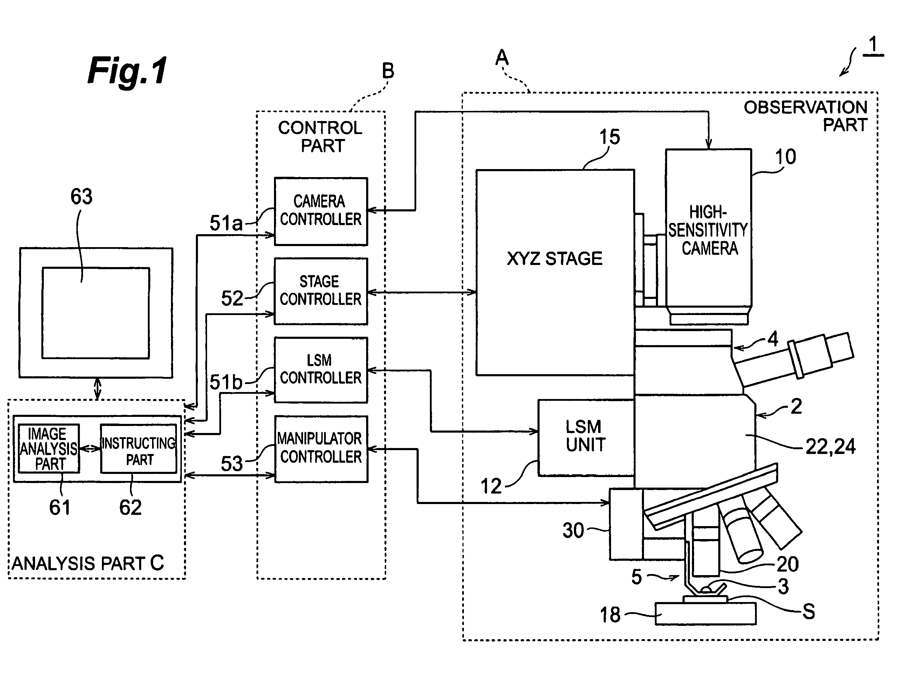

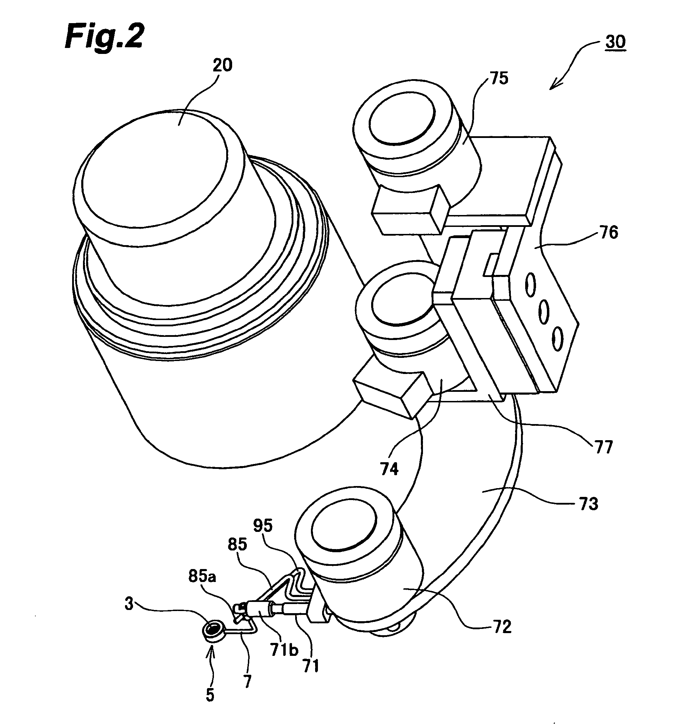

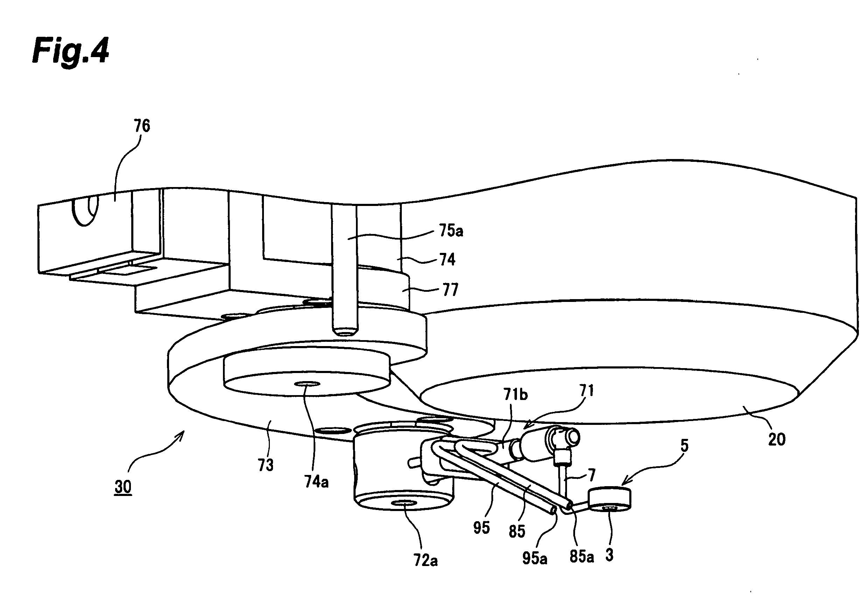

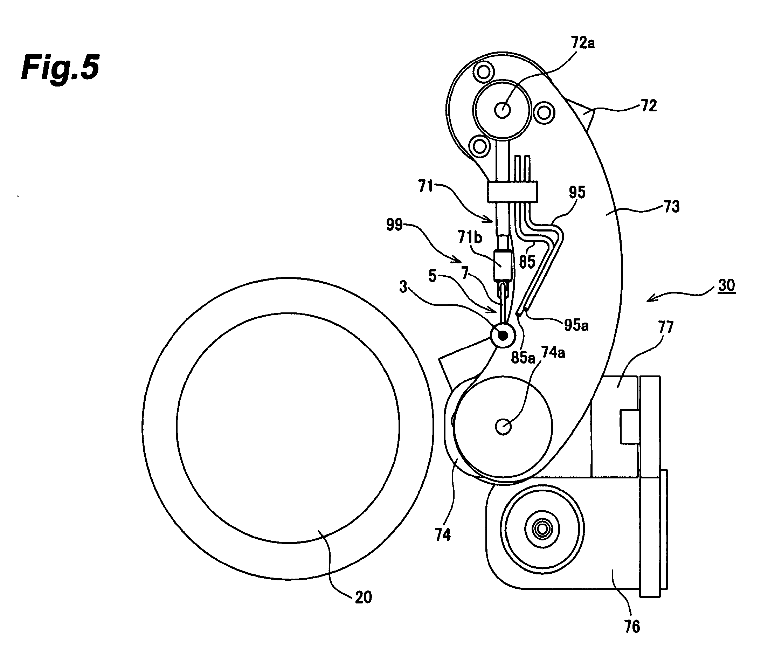

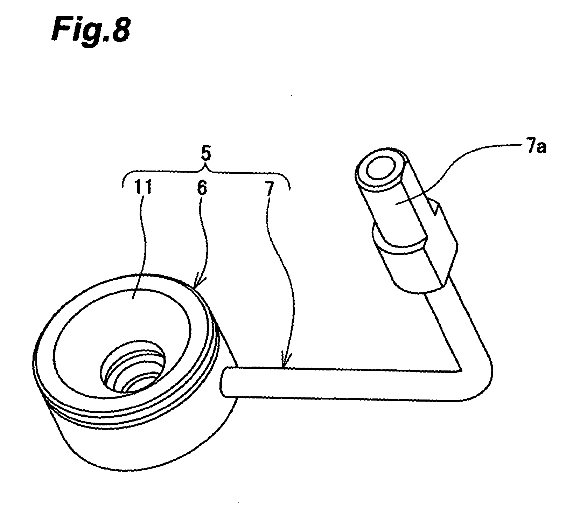

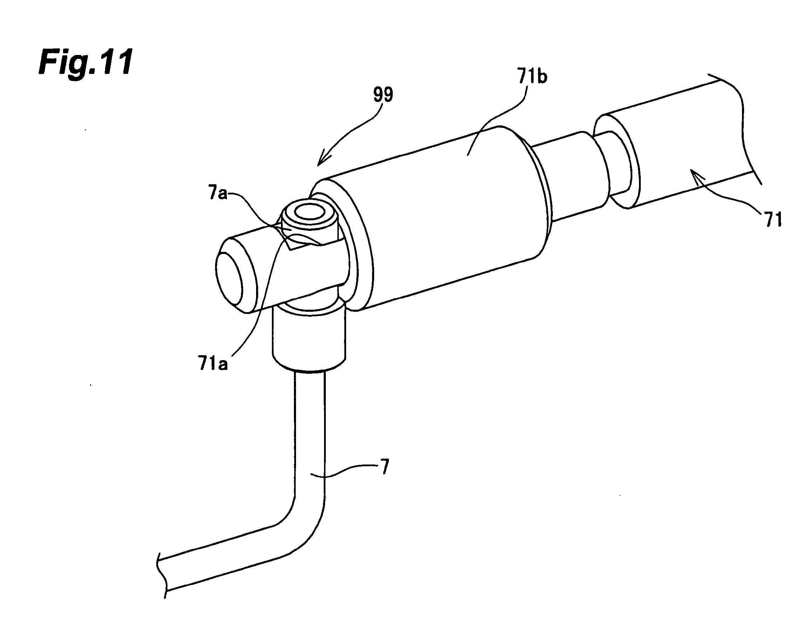

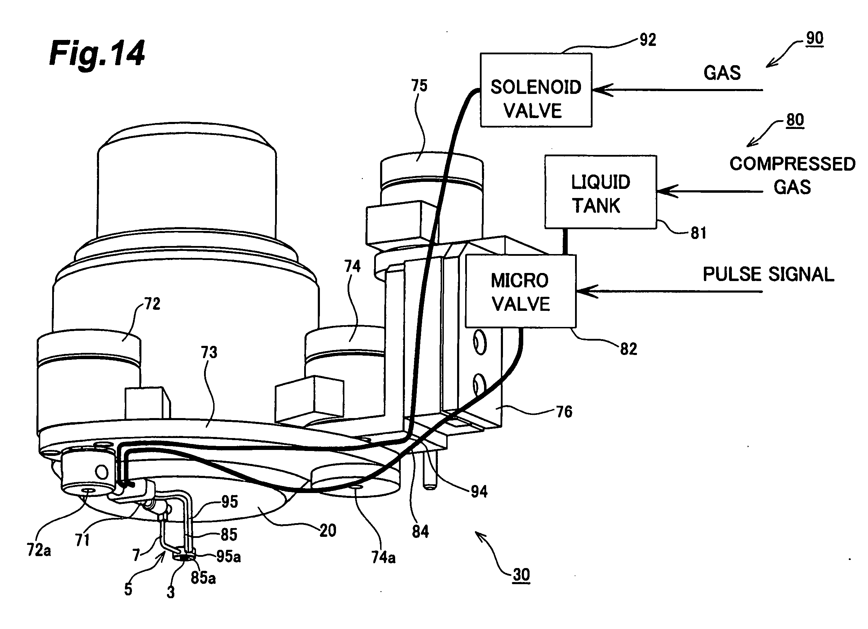

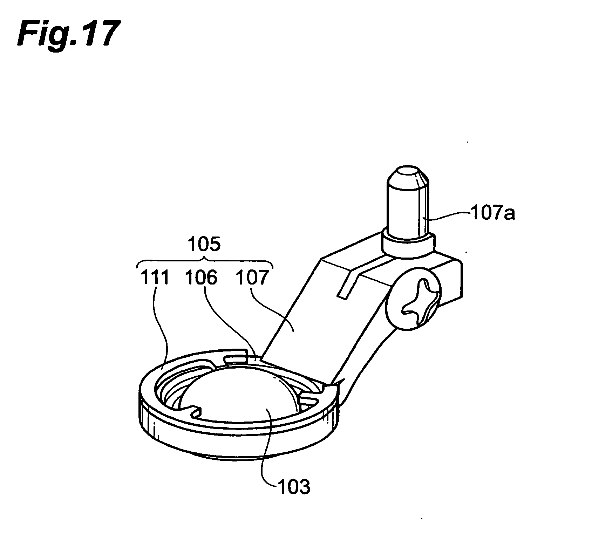

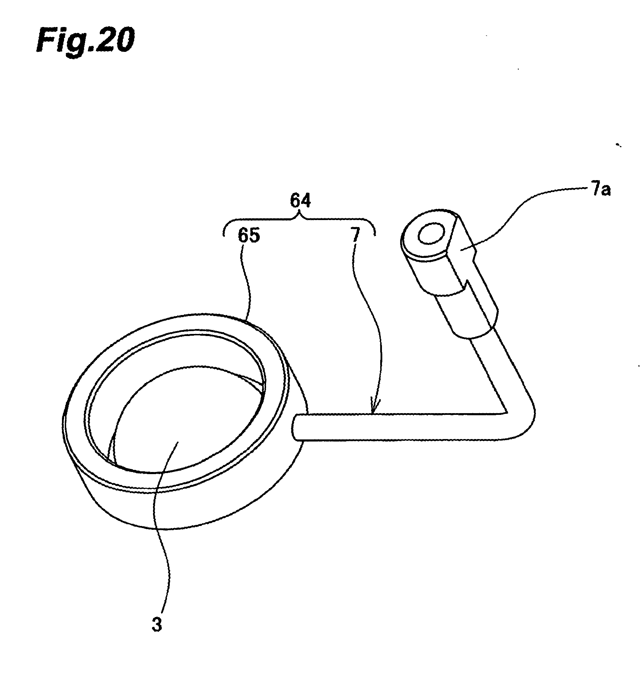

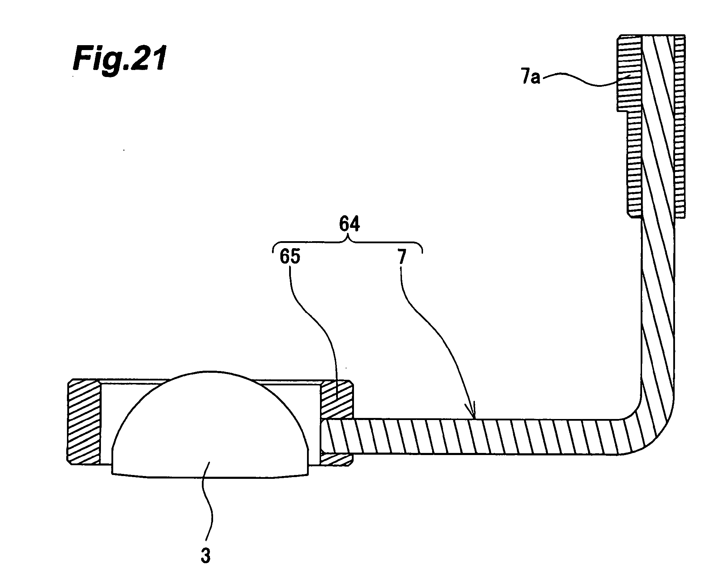

Preferred embodiments of this invention's solid immersion lens moving device and microscope shall now be described with reference to Fig. 1 to Fig. 21. Fig. 1 is a block diagram showing an electronic device inspection device equipped with a solid immersion lens moving device of a first embodiment of this invention, Fig. 2 to Fig. 4 are respectively perspective views showing a solid immersion lens moving device and an objective lens, Fig. 5 to Fig. 7 are respectively diagrams of states illustrating moving operations of the solid immersion lens moving device, Fig. 8 to Fig. 10 are respectively diagrams showing the solid immersion lens holder, Fig. 11 to Fig. 13 are respectively perspective views showing a part at which the solid immersion lens holder and the solid immersion lens moving device are connected, Fig. 14 to Fig. 16 are respectively diagrams showing an optical coupling material supplying means and a drying gas supplying means, Fig. 17 to Fig. 19 are respectively diagrams showing a solid immersion lens holder used in another embodiment of this invention, and Fig. 20 and 21 are respectively diagrams showing another solid immersion lens holder. In the respective figures, the same elements shall be provided with the same symbols and redundant description shall be omitted. This invention's solid immersion lens moving device and microscope are generally applicable to sample observation using a solid immersion lens. However, in the following description, examples of application to electronic device inspection (semiconductor inspection) shall mainly be described.

First, the electronic device inspection device equipped with the solid immersion lens moving device of the first embodiment shall be described. As shown in Fig. 1, electronic device inspection device 1 is an inspection device, for which the object of observation is a semiconductor device S, wherein a circuit pattern, for example, of transistors and wiring, etc., is formed on a semiconductor substrate, and images of this semiconductor device S are acquired for inspection of the internal information thereof. With this invention, "internal information" shall include circuit patterns of semiconductor devices as well as emission of weak light from semiconductor devices. Such weak light emissions include those caused by an abnormal position due to a defect of a semiconductor device, transient light emission that accompanies the switching operation of a transistor inside a semiconductor device, etc. The generation of heat due to a defect of a semiconductor device is also included.

This electronic device inspection device 1 is equipped with an observation part A for performing observation of semiconductor device S, a control part B for controlling the operations of the respective parts of observation part A, and an analysis part C for performing the processing, instructing, etc., necessary for the inspection of semiconductor device S. Semiconductor device S is set, with its rear surface facing upward, on a stage 18, provided in observation part A, and in the present embodiment, inspection device 1 is used to inspect the lower surface in the figure of semiconductor device S (integrated circuits, etc., formed on a semiconductor substrate surface of semiconductor device S).

Observation part A is equipped with a high-sensitivity camera 10 and a laser scanning microscope (LSM) unit 12, which are image acquisition means for acquiring images from semiconductor device S, an optical system 2, which includes an objective lens 20 of a microscope 4 that is positioned between semiconductor device S and high-sensitivity camera 10 and LSM unit 12, a solid immersion lens 3, for obtaining magnified observation images of semiconductor device S, a solid immersion lens manipulator 30, which is a solid immersion lens moving device that moves solid immersion lens 3 in three-dimensional directions, and an X-Y-Z stage 15, which moves the abovementioned components respectively in orthogonal X, Y, and Z directions.

In addition to the abovementioned objective lens 20, optical system 2 is equipped with a camera optical system 22 and an LSM unit optical system 24. A plurality of objective lenses 20 of different magnifications are provided in a switchable manner. Camera optical system 22 guides light from semiconductor device S that has passed through an objective lens 20 to high-sensitivity camera 10, and high-sensitivity camera 10 thereby acquires an image of a circuit pattern, etc., of semiconductor device S. Meanwhile, LSM unit optical system 24 guides infrared laser light from LSM unit 12 to semiconductor device S by reflecting the light to the objective lens 20 side by means of a beam splitter (not shown) and branches, by means of the beam splitter, a part of reflected light from semiconductor device S that is directed towards high-sensitivity camera 10 via objective lens 20 and guides this light to LSM unit 12.

This LSM unit 12 scans an infrared laser light in the X-Y directions and emits this light towards the semiconductor device S side and detects the reflected light from semiconductor device S by means of a photodetector (not shown). The intensity of this detected light will be an intensity that reflects the circuit pattern of semiconductor device S. Thus by X-Y scanning of semiconductor device S by infrared laser light, LSM unit 12 acquires an image of the circuit pattern, etc., of semiconductor device S.

X-Y-Z stage 15 is for moving high-sensitivity camera 10, LSM unit 12, optical system 2, solid immersion lens 3, solid immersion lens manipulator 30, etc., as necessary in each of the X-Y directions (horizontal directions; directions parallel to semiconductor device S, which is the observed object) and the Z direction (vertical direction) orthogonal to the X-Y directions.

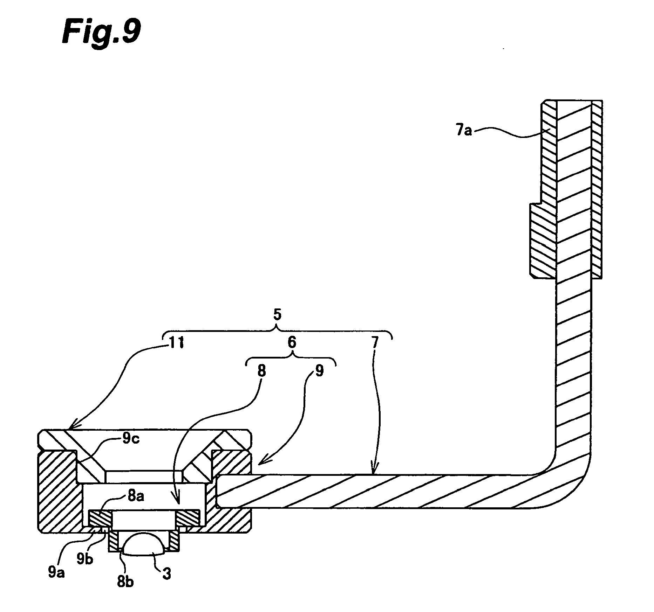

Solid immersion lens 3 is a microlens having a hemispherical shape (see Fig. 9) or a hyperhemispherical shape, called a Weierstrass sphere, of a size of approximately 1mm to 5mm. By the bottom surface of this solid immersion lens 3 coming into close contact with an observation position (the illustrated upper surface) for observing semiconductor device S, a magnified observation image of the surface (the illustrated lower surface) of semiconductor device S at the rear side is obtained.

Specifically, a solid immersion lens that is used in a semiconductor inspection device is formed of a high refractive index material that is practically the same or close to the substrate material of the semiconductor device in refractive index. Representative examples of this material include Si, GaP, GaAs, etc.

By putting such a microscopic optical element into close optical contact with a substrate surface of a semiconductor device, the semiconductor substrate itself can be put to use as a part of the solid immersion lens. In rear surface analysis of a semiconductor device using a solid immersion lens, in setting the focal point of an objective lens to an integrated circuit formed on a surface of a semiconductor substrate, the focusing angle can be increased and the refractive index of the medium can be increased by the effect of the solid immersion lens. Light flux of high NA can thus be made to pass through the substrate and the achievement of high resolution by use of short wavelengths can be anticipated.

The lens shape of such a solid immersion lens 3 is determined by conditions with which aberrations are eliminated. With a solid immersion lens having a hemispherical shape, the sphere center thereof becomes the focal point. In this case, both the numerical aperture NA and the magnification are multiplied by n. On the other hand, with a solid immersion lens with a hyperhemispherical shape, the focal point is located at a position shifted downward by R/n from the sphere center. In this case, both the numerical aperture NA and the magnification are multiplied by n². Solid immersion lens 3 of conditions besides the above, such as that with which the focal point is positioned between the sphere center and the position shifted downward by R/n from the sphere center, etc., may be used in accordance with the specific observation conditions, etc., for semiconductor device S.

Solid immersion lens holder 5 (see Fig. 8 to Fig. 10) is for favorably supporting solid immersion lens 3. Also, solid immersion lens manipulator 30 (see Fig. 2 to Fig. 7), which moves this solid immersion lens holder 5 in three-dimensional directions, is for moving solid immersion lens 3, which is supported by solid immersion lens holder 5, to the respective predetermined positions of: an inserted position, which is a position between semiconductor device S and objective lens 20 and includes an optical axis from semiconductor device S to objective lens 20; a closely contacting position, at which the bottom surface of solid immersion lens 3 is put in close contact with an observation position of semiconductor device S; a standby position, which lies outside the abovementioned optical axis; an exchange position for exchanging solid immersion lens 3, etc. This solid immersion lens holder 5 and solid immersion lens manipulator 30 shall described in detail later.

Control part B is equipped with a camera controller 51a, a laser scan (LSM) controller 51b, a stage controller 52, and a manipulator controller 53. Camera controller 51a and LSM controller 51b control the operations of high-sensitivity camera 10 and LSM unit 12, respectively, and thereby control the execution of the observation of (acquisition of images from) semiconductor device S, which is carried out in observation part A, as well as the setting of the observation conditions, etc.

Stage controller 52 controls the operation of X-Y-Z stage 15 and thereby controls the movement, positioning, focusing, etc., of high sensitivity camera 10, LSM unit 12, optical system 2, etc., to positions corresponding to the observation position of semiconductor device S. Manipulator controller 53 controls the operation of solid immersion lens manipulator 30 and thereby controls movements of solid immersion lens 3 to the abovementioned predetermined positions as well as fine adjustment of the closely contacting position of solid immersion lens 3, etc. (details shall be provided later).

Analysis part C is equipped with an image analysis part 61 and an instructing part 62 and is arranged from a computer. Image analysis part 61 performs the necessary analysis processes, etc., on image information from camera controller 51a and laser scan controller 51b. Instructing part 62 references the contents input by an operator, the contents of analysis by image analysis part 61, etc., and provides the necessary instructions concerning the execution of inspection of semiconductor device S in observation part A, via the control part B. The image, data, etc., that have been acquired or analyzed at analysis part C are displayed as necessary on a display device 63, connected to analysis part C.

Solid immersion lens holder 5 and solid immersion lens manipulator 30, which make up the characteristics of the present embodiment, shall now be described in detail.

As shown in Fig. 8 and Fig. 9, solid immersion lens holder 5 is equipped with a holder 6, which is formed to a substantially cylindrical form and supports solid immersion lens 3, and an arm part 7, which holds this holder 6. Since this solid immersion lens holder 5 comes in contact with an optical contact liquid to be described below in some cases, it is formed, for example, of stainless steel, aluminum, or other metal of high corrosion resistance or of a resin, such as acrylic resin, PET, polyethylene, polycarbonate, etc., which can be formed readily in accordance with the shape of the solid immersion lens.

As shown in Fig. 9, holder 6 is equipped with a first holder 8, which holds solid immersion lens 3, and a second holder 9, which supports this first holder 8. This first holder 8 and second holder 9 are formed to a substantially cylindrical form so as not to obstruct the optical path with respect to semiconductor device S.

First holder 8 is equipped on the outer peripheral surface of an upper part thereof with an annular collar part 8a, which protrudes outwards, and is equipped on the bottom surface with an annular collar part 8b, which is directed inwards, and solid immersion lens 3 is held by being fixed, for example, by an adhesive agent, etc., to first holder 8 in a state in which the bottom surface of solid immersion lens 3 protrudes downward through an opening formed at the inner periphery of annular collar part 8b.

Second holder 9 is equipped at its bottom surface with an inwardly directed annular collar part 9a. Annular collar part 8a of first holder 8 is set on annular collar part 9a of second holder 9 and first holder 8 and solid immersion lens 3 are supported in the gravity direction by second holder 9 in a state wherein a lower part of first holder 8 is protruded downward through an opening 9b, formed at the inner periphery of annular collar part 9a.

Here, if the outer diameter of the lower part of first holder 8 is A, the outer diameter of annular collar part 8a of first holder 8 is B, and the inner diameter of opening 9b of second holder 9 is C, these are set to satisfy the relationship, A < C < B. First holder 8 is made free with respect to second holder 9 and yet the falling-off of first holder 8 downwards from second holder 9 is prevented.

Second holder 9 is also equipped at an opening 9c at an upper part thereof with a cap 11, which is mounted by fitting, screwing, etc., and is for preventing the falling off of the solid immersion lens. As with first holder 8 and second holder 9, this cap 11 is formed to a substantially cylindrical form, and if the inner diameter of cap 11 is D, it is set to satisfy the relationship, D < B. Thus by means of cap 11, separation, such as the springing out of first holder 8, which holds solid immersion lens 3, through opening 9c at the upper part of second holder 9, is thus prevented and the loss of the solid immersion lens is prevented without obstruction of the optical path for semiconductor device S.

Also, arm part 7 is arranged by bending a round bar to a substantially L-like shape and extends outward from second holder 9 with one end thereof being directed upwards and the other end thereof being fixed to a side part of second holder 9. As shown in Fig. 8 and Fig. 9, a rotation stopping part 7a, with which a part of a side face of a pipe is made a flat surface, is fixed, for example, by fitting, etc., onto one end of arm part 7 as a rotation stop for arm part 7 and holder 6. Though arm part 7 is arranged to be substantially L-like in shape and has one end thereof extending upward, it may be arranged to extend within the X-Y plane instead.

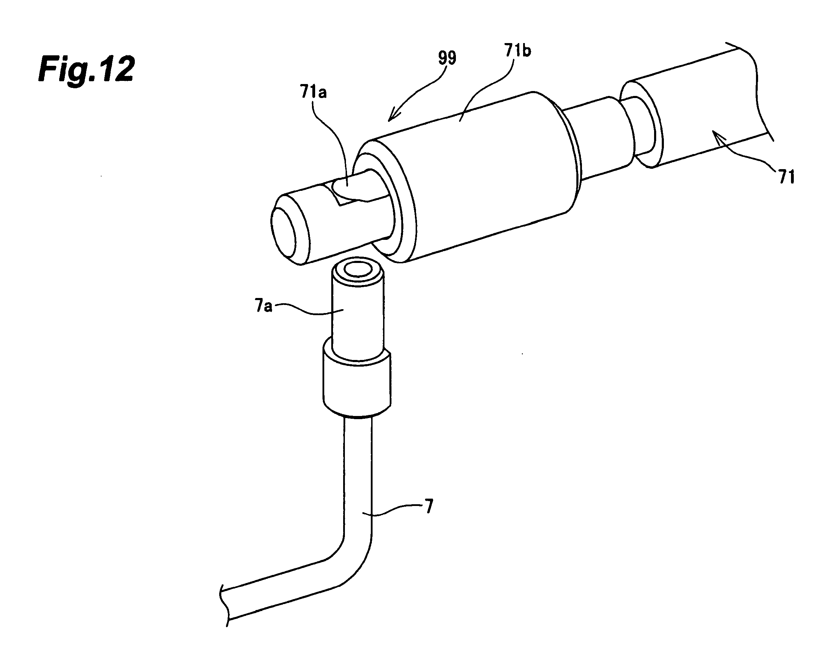

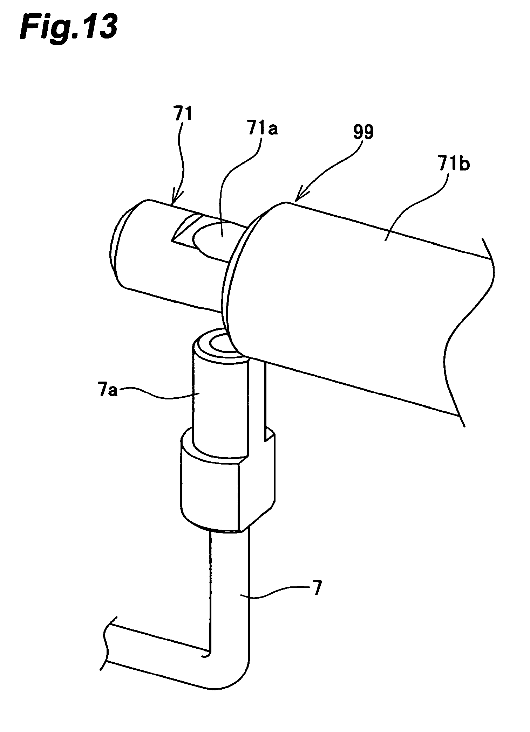

As shown in Fig. 11, arm part 7, which makes up this solid immersion lens holder 5, is detachably connected to one end of a first arm member 71 of solid immersion lens manipulator 30. As shown in Fig. 12 and Fig. 13, connecting part 99, which connects this first arm member 71 with solid immersion lens holder 5, is equipped at first arm member 71 with a through hole 71 a, through which rotation stopping part 7a of arm part 7 can be inserted in the vertical direction, and a fastening part 71 b, which has its front end face formed to a flat surface and which narrows or spreads through hole 71a by being screwed forward or backward (advancing or retreating).

In this arrangement, rotation stopping part 7a, which has been inserted in through hole 71 a, is fixed to first arm member 71 by advancing fastening part 71b by turning it in the fastening direction. In this state, the flat surface of rotation stopping part 7a of arm part 7 is made to contact and then put in close contact with the flat surface at the front end of fastening part 71b, thereby arranging a rotation stop for arm part 7 and solid immersion lens holder 5. Also, arm part 7, which has thus been fixed to first arm member 71, can be released and extracted from first arm member 71, for example, for exchange of solid immersion lens 3, etc., by retreating fastening part 71b by rotating it in the opposite direction.

Solid immersion lens manipulator 30, which holds solid immersion holder 5 by means of this connecting part 99, freely moves solid immersion lens 3 in solid immersion lens holder 5 to the respective abovementioned predetermined positions (inserted position, closely contacting position, standby position, and exchange position) in three-dimensional directions as shown in Fig. 1 to Fig. 7. As shown in Fig. 2 to Fig. 7, this solid immersion lens manipulator 30 is equipped with the above-described first arm member 71, to which solid immersion lens holder 5 is mounted, a first arm member rotation source 72, which rotates this first arm member 71 within the X-Y plane, a second arm member 73, which holds this first arm member rotation source 72, a second arm member rotation source 74, which rotates this second arm member 73 within the X-Y plane, and a Z-direction movement source 75, which moves this second arm member rotation source 74 in the Z-direction that is orthogonal to the X-Y plane, and this Z-direction movement source 75 is deemed to be at the base end side and the moving first arm member 71 is deemed to be the terminal end side.

Specifically, Z-direction movement source 75 is arranged from a Z-axis motor, etc., with which a movement shaft 75a is moved in the Z-direction, for example, by a feeding screw, etc., and is mounted to microscope 4 as the main device body side via a supporting part 76. This supporting part 76 is detachably mounted to microscope 4, for example, by being screwed on, etc., so as to be convenient, for example, for carrying out microscopic observation upon removing solid immersion lens manipulator 30 or carrying out microscopic observation upon mounting another lens moving device.

Second arm member rotation source 74 is connected via a supporting part 77 to movement shaft 75a of Z-direction movement source 75. This second arm member rotation source 74 is arranged from a motor, etc., with which the output shaft is, for example, a rotation axis 74a, which rotates in the forward and reverse directions (needs only to rotate within a predetermined range), and is moved in the Z-direction by the driving of Z-direction movement source 75.

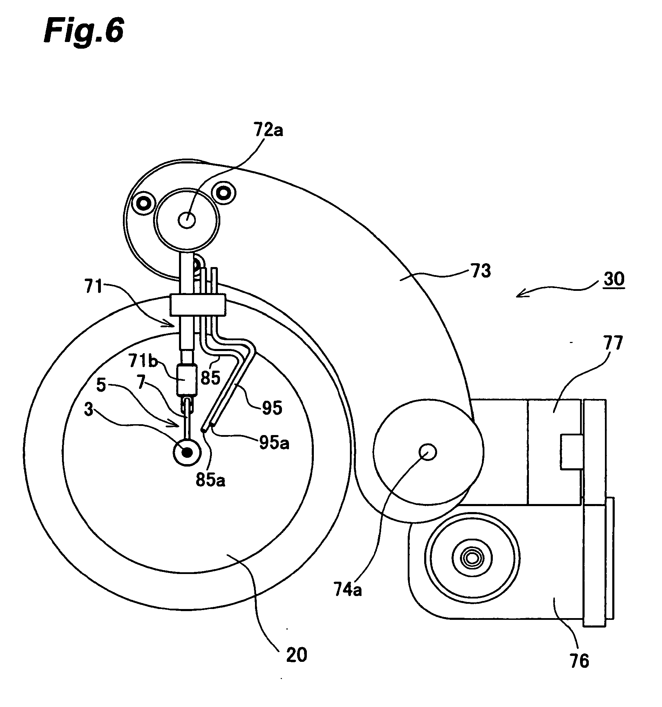

One end of second arm member 73 is connected to this rotation axis 74a of second arm member rotation source 74. Though details shall be given later, this second arm member 73 is arranged in a curving manner so that second arm member 73 can be moved away readily from the field of view of the observation position of semiconductor device S (field of view of objective lens 20) as shown in Fig. 6.

First arm member rotation source 72 is fixed to the other end of second arm member 73 as shown in Fig. 2 to Fig. 7. This first arm member rotation source 72 is arranged from a motor, etc., with which the output shaft is, for example, a rotation axis 72a, which rotates in the forward and reverse directions (needs only to rotate within a predetermined range). Rotation axis 72a of first arm member rotation source 72 and rotation axis 74a of second arm member rotation source 74 are thus positioned non-coaxially. By the driving of second arm member rotation source 74, first member rotation source 72 is rotated along with second arm member 73 within the X-Y plane and with rotation axis 74a of second arm member rotation source 74 as the supporting point.

The other end of the above-described first arm member 71 is connected to rotation axis 72a of first arm member rotation source 72. This first arm member 71 is rotated within the X-Y plane and with rotation axis 72a of first arm member rotation source 72 as the supporting point by the driving of first arm member rotation source 72.

Thus by the driving of first arm member rotation source 72 and second arm member rotation source 74, solid immersion lens 3, supported by solid immersion lens holder 5 connected to one end of first arm member 71, is moved in synthetic directions, resulting from the synthesis of the respective rotations, within the X-Y plane, is also moved in the Z-direction by the driving of Z-direction movement source 75, and is consequently moved freely to the respective predetermined positions in three-dimensional directions.

Furthermore, solid immersion lens manipulator 30 of this embodiment is used for obtaining a magnified observation image by means of solid immersion lens 3, and, as shown in Fig. 14, is equipped with an optical coupling material supplying means 80, which supplies an optical coupling material for optically coupling solid immersion lens 3 to the observation position of semiconductor device S, and a drying gas supplying means 90, which supplies a gas for drying this optical coupling material.

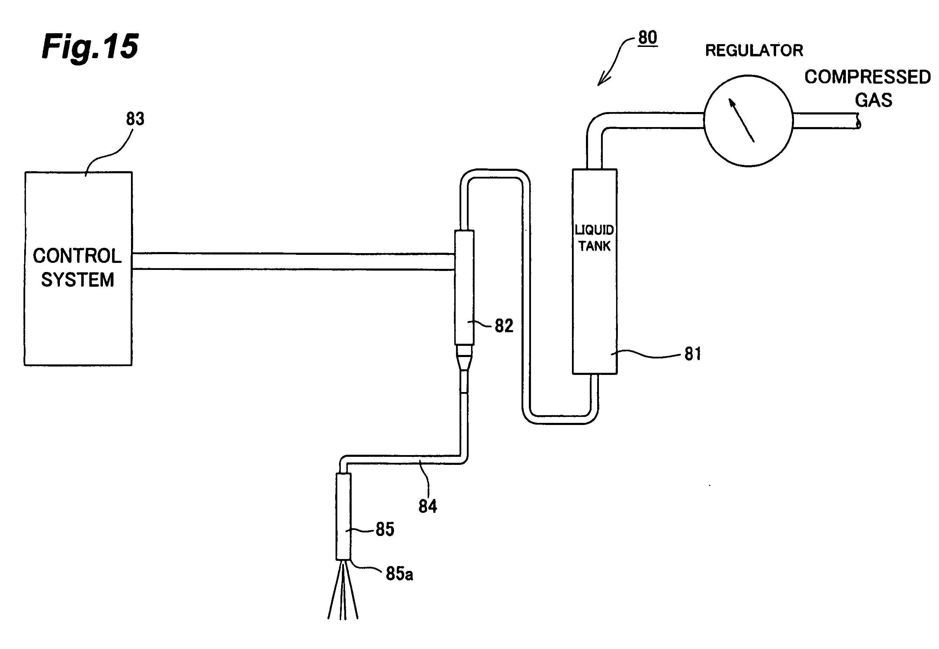

Optical coupling material supplying means 80 supplies an optical contact liquid (comprising, for example, water and a surfactant), which contains, for example, amphiphilic molecules, to the observation position of semiconductor device S immediately prior to bringing solid immersion lens 3 into close contact with the observation position. With this optical coupling material supplying means 80, an optical contact liquid is contained inside a compact dedicated liquid tank 81, which has a volume, for example, of 1cc and is fixed to supporting part 76 as shown in Fig. 14 and Fig. 15. The contained optical contact liquid is then put in a pressurized state by means of a compressed gas, such as compressed air, etc., and by supplying a pulse signal from a control system 83 to a microvalve 82, which, for example, is a solenoid valve that is equipped with a spring, is fixed to supporting part 76, and is connected to the exit of liquid tank 81, the optical contact liquid is sprayed from a supply port 85a at the tip of an optical coupling material supply pipe 85, which is connected to microvalve 82 via a flexible pipe 84 and is fixed to first arm member 71 as shown in Fig. 2 to Fig. 7.

It is sufficient that the amphiphilic molecule be a molecule having both a hydrophilic group (carboxyl group, sulfo group, quaternary ammonium group, hydroxyl group, etc.) and a hydrophobic group (also called a lipophilic group; examples include long-chain hydrocarbon groups, etc.), and, for example, a surfactant molecule (ionic surfactant molecule or nonionic surfactant molecule) may be used favorably. Other examples of amphiphilic molecules include glycerin, propylene glycol, sorbital, and other wetting agents, phospholipids, glycolipids, aminolipids, etc.

Since the optical contact liquid, which contains amphiphilic molecules, is low in surface tension, it spreads across the semiconductor substrate, which is a hydrophobic surface. In the process of drying this optical contact liquid, forces that tend to maintain the wettability of the surface of the semiconductor substrate and the bottom surface of the solid immersion lens become dominant. The vaporization of mainly the water of the optical contact liquid thus progresses while the surface interval between the bottom surface of the solid immersion lens and the semiconductor substrate surface narrows. In the final stage, the solid immersion lens and the semiconductor substrate become optically coupled.

It is considered that in this state, van der Waals forces act between water molecules and the hydrophilic groups of the amphiphilic molecules, which have become physically adsorbed onto the semiconductor substrate surface and the bottom surface of the solid immersion lens, and due to the binding of water molecules, the vaporization thereof is stopped. The distance between the solid immersion lens and the semiconductor substrate at this point can be made, for example, no more than 1/20λ (λ: illumination wavelength), and as a result, evanescent coupling as well as physical fixation of the solid immersion lens and the semiconductor substrate are achieved. "Optical contact" in this invention shall refer to a state wherein optical coupling is achieved by evanescent coupling.

As an optical coupling material besides the above-described optical contact liquid, a refractive index matching fluid (index matching liquid, etc.), such as that described in Japanese Patent Publication No. H7-18806 and with which refractive index matching of a solid immersion lens and a semiconductor substrate is achieved, can be cited. A refractive index matching fluid differs from an optical contact liquid, and whereas the former realizes a high NA by means of the refractive index of a fluid, the latter has a role of aiding evanescent coupling. Though an embodiment using an optical contact liquid shall be described in detail here, the same effects can be realized with an embodiment using a refractive index matching fluid. However in such a case, since the fluid does not have to be dried necessarily, an embodiment is possible wherein drying gas supplying means 90 is omitted.

This optical coupling material supply pipe 85 is fixed to first arm member 71 and supply port 85a at the front end thereof is set near solid immersion lens holder 5 as shown in Fig. 2 to Fig. 7. The pipe thus moves along with solid immersion lens 3 and is enabled to spray the optical contact liquid towards the targeted observation position. This optical contact liquid is controlled in sprayed amount by control of the duration during which the pulse signal is on and is sprayed from supply port 85a at a precision of the picoliter level. The sprayed amount of optical contact liquid is determined suitably in accordance with the size of solid immersion lens 3. Also, this optical contact liquid is preferably exchanged as suited in order to prevent decomposition, change of concentration, and clogging by the liquid.

In place of microvalve 82, an optical coupling material supplying means may be used wherein a tubing type microdispenser is used and, without pressurizing liquid tank 81 by compressed gas, the tube of the tubing type microdispenser is mechanically squeezed to make the optical contact liquid inside liquid tank 81 drip towards the observation position from supply port 85a at the front end of optical coupling material supply pipe 85 via flexible pipe 84. In this case, the capacity of liquid tank 81 is set to a few dozen cc's and the dripping amount is determined as suited according to the size of solid immersion lens 3.

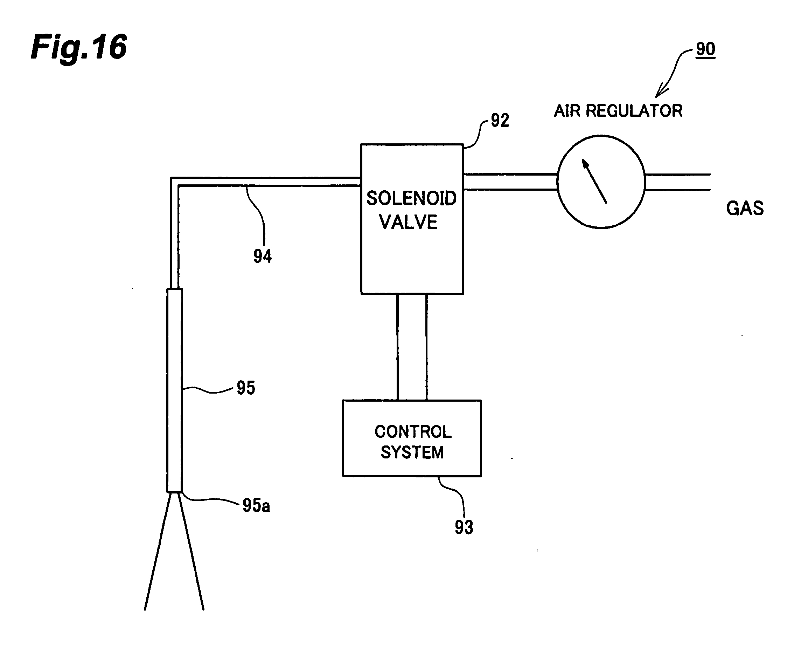

Drying gas supplying means 90 supplies a gas for rapidly drying the optical contact liquid between the observation position of semiconductor device S and solid immersion lens 3. As shown in Fig. 14 and Fig. 16, with this drying gas supplying means 90, ON/OFF signals are supplied from a control system 93 to a solenoid valve 92, fixed to support part 76, to make a gas, such as compressed dried air, nitrogen gas, etc., be blown out from a supply port 95a at the tip of a gas supply pipe 95, which is connected to solenoid valve 92 via a flexible pipe 94 and is fixed to first arm member 71 as shown in Fig. 2 to Fig. 7.

As with optical coupling material supply pipe 85, this gas supply pipe 95 is fixed to first arm member 71 and supply port 95a at the front end thereof is set near solid immersion lens holder 5 as shown in Fig. 2 to Fig. 7. The pipe thus moves along with solid immersion lens 3 and is enabled to blow gas towards the targeted position between the observation position of the semiconductor device and solid immersion lens 3.

The actions of electronic device inspection device 1, having the above-described arrangement, shall now be described. The description shall start from the state, shown in Fig. 5, wherein solid immersion lens 3 is positioned at the standby position. At this standby position, first and second arm members 71 and 73 are folded and solid immersion lens 3 and first and second arm members 71 and 73 are set outside the view field of objective lens 20. At this point, first holder 8, holding solid immersion lens 3, has its annular collar part 8a set on annular collar part 9a of second holder 9 and first holder 8 and solid immersion lens 3 are supported in the gravity direction by second holder 9 as shown in Fig. 9. In this standby state, a pattern image, which is a normal observation image of the observation position of semiconductor device S is acquired and then, for example, a voltage is applied, etc., to semiconductor device S and the image in this process is acquired.

Here, if there is an abnormal position in semiconductor device S, an emission image will be obtained, and the abnormal position of semiconductor device S can thus be specified by overlapping the normal observation image with the image obtained when a voltage was applied. In the case where there is an abnormal position, high-sensitivity camera 10, LSM unit 12, optical system 2, solid immersion lens holder 5, solid immersion lens manipulator 30 are moved by means of X-Y-Z stage 15 so that objective lens 20 will be positioned coaxial to the abnormal position.

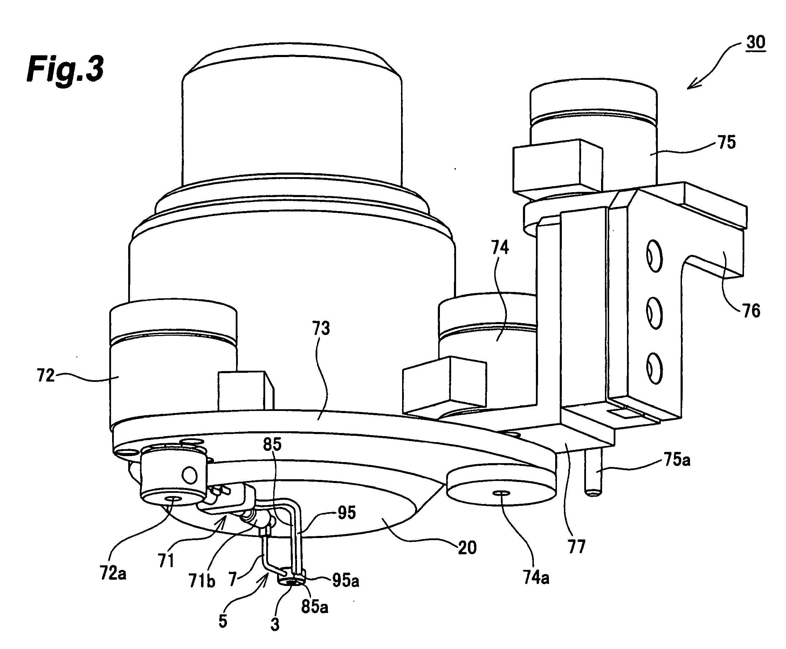

Solid immersion lens 3 is then set with respect to the observation position of semiconductor device S. In this case, firstly, first and second arm member rotation sources 72 and 74 of solid immersion lens manipulator 30 are driven and by thus rotating first and second arm members 71 and 73, solid immersion lens 3, at the standby position, is moved to the inserted position, between semiconductor device S and objective lens 20 and containing the optical axis from semiconductor device S to objective lens 20 as shown in Fig. 3, Fig. 4 and Fig. 6. Here, since second arm member 73 is formed to have a curved shape, second arm member 73 is kept readily away from the view field without obstructing the view field of objective lens 20 as shown in Fig. 6.

When solid immersion lens 3 has thus been inserted at the inserted position, Z-direction movement source 75 of solid immersion lens manipulator 30 is driven to lower solid immersion lens 3. When solid immersion lens 3 then approaches the observation position, optical contact liquid is supplied to the observation position, which is the targeted position, from optical coupling material supplying means 80 and solid immersion lens 3 is set on the observation position and positioned at the closely contacting position.

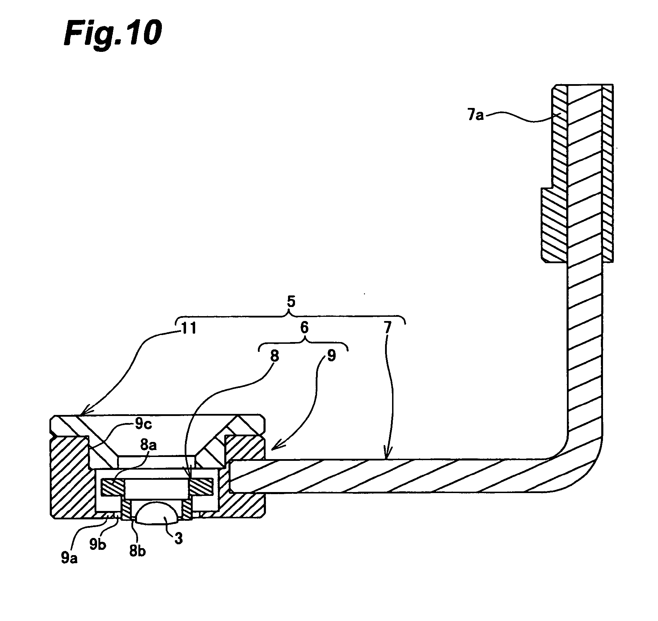

When solid immersion lens 3 is thus set on the observation position of semiconductor device S, solid immersion lens 3 and first holder 8, which are supported in the gravity direction by second holder 9, are raised by semiconductor device S as shown in Fig. 10.

Fine adjustment of the closely contacting position of solid immersion lens 3 is then carried out. This fine adjustment is carried out by minutely moving solid immersion lens holder 5 in the Z-direction by the driving of Z-direction movement source 75 of solid immersion lens manipulator 30 and minutely swinging first arm member 71 by means of first arm member rotation source 72 and these are carried out so that first holder 8, holding solid immersion lens 3, will be spaced apart in the X-Y-Z directions from second holder 9 and thus will not contact second holder 9. Specifically, an image containing reflected light from solid immersion lens 3 is acquired, and the reflected light from the reflecting surfaces of various parts of solid immersion lens 3 in the reflected light image, contained in the abovementioned image, are used as guides.

More specifically, analysis is performed automatically or based on instructions from an operator on the acquired image by means of image analysis part 61 of analysis part C to determine the position of the center of gravity of the reflected light image. Then by means of instructing part 62 of analysis part C, solid immersion lens manipulator 30 is instructed via manipulator controller 53 to perform fine adjustment of the closely contacting position of solid immersion lens 3 so that the center of gravity position of the reflected light image obtained at image analysis part 61 matches the observation position at semiconductor device S. The positioning of solid immersion lens 3 with respect to the observation position of semiconductor device S and objective lens 20 is thus carried out.

Since solid immersion lens 3 and first holder 8 are put in a free state with respect to second holder 9 in a state in which these are raised by semiconductor device S, only the weights of solid immersion lens 3 and first holder 8 themselves act on the observation position of semiconductor device S and thus the application of an excessive force is eliminated and yet solid immersion lens 3 is put in close contact in conformance (compliance) to the observation position.

Gas is then supplied by means of drying gas supplying means 90 to the region at which solid immersion lens 3 contacts the observation position, which is the targeted position, and by thus drying the optical contact liquid, solid immersion lens 3 is rapidly put into definite, close contact with the observation position of semiconductor device S. Since solid immersion lens 3 is thus put into definite, close contact with the observation position of semiconductor device S by means of the optical contact liquid from optical coupling material supplying means 80, high-precision observation is enabled, and since the drying of the optical contact liquid is promoted by the gas from drying gas supplying means 90, immediate execution of observation is enabled.

When close contact of solid immersion lens 3 with the observation position is thus achieved, adjustment of the distance, between semiconductor device S, on and with which solid immersion lens 3 is set and put in close contact, and objective lens 20, is instructed from instructing part 62 to X-Y-Z stage 15 via stage controller 52 to perform focusing. In this process, since solid immersion lens manipulator 30 and solid immersion lens 3 move in the Z-direction along with objective lens 20, solid immersion lens 3 is made to move in the opposite Z-direction by means of solid immersion lens manipulator 30 so as to maintain the close contact of solid immersion lens 3 with the observation position. A magnified observation image of the observation position is then acquired via optical system 2, which includes objective lens 20 and solid immersion lens 3 that is put in close contact with the observation position of semiconductor device S, and high resolution observation is carried out.

During this observation, since solid immersion lens 3 and first holder 8 are put in a free state with respect to second holder 9 as described above, temperature drifts at the second holder 9 side or the semiconductor device S side are cut off with respect to the counterpart side and the influences of these temperature drifts are thus eliminated.

For observation of the next observation position, the optical contact liquid is supplied again from optical coupling material supplying means 80, the close contact of solid immersion lens 3 with the observation position is thereby released, and thereafter, solid immersion lens holder 5 is moved by solid immersion lens manipulator 30 by the reverse procedures as the procedures described above to move solid immersion lens 3 to the standby position shown in Fig. 5. Subsequently, the same procedures as those described above are repeated.

In place of the optical contact liquid, the solvent thereof may be used to release the optical contact. The optical contact is released by wetting the contacting portion with the optical contact liquid or the solvent thereof since the optical contact liquid or solvent thereof reenters into the boundary surface between the solid immersion lens and the semiconductor substrate and destroys the optically coupled state and the physically fixed state. By this method, the solid immersion lens and the semiconductor device can be separated without applying an excessive force. Since the semiconductor device and the solid immersion will thus not become flawed, the solid immersion lens can be reused.

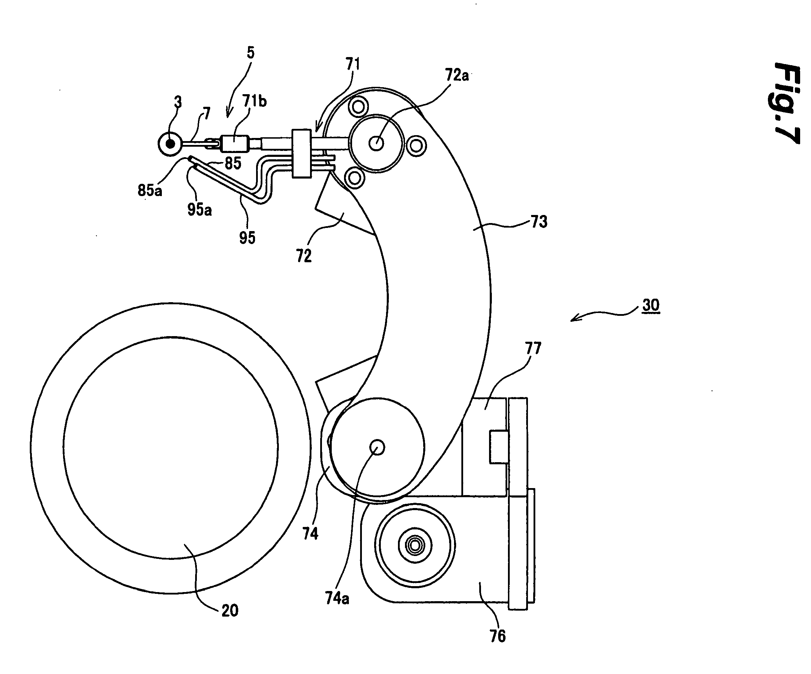

Here, if the need to exchange solid immersion lens 3 arises, first arm member rotation source 72 of solid immersion lens manipulator 30 is driven to rotate first arm member 71 to move solid immersion lens 3 from the standby position shown in Fig. 5, at which connecting part 99 is positioned close to a lower part of second arm member 73 and is difficult to handle, to the lens exchange position shown in Fig. 2 and Fig. 7. Connecting part 99 is moved outward greatly from near the lower part of second arm member 73 and solid immersion lens holder 5 is exchanged together with arm part 7. Since connecting part 99 is set at a handling position in the process of lens exchange, the detachment and attachment of arm part 7 of solid immersion lens holder 5 with respect to first arm member 71 is facilitated, and since solid immersion lens holder 5 is exchanged along with arm part 7, the minute solid immersion lens 3 does not have to be handled and the exchange of the lens is thus facilitated.

Thus with solid immersion lens holder 5 of the present embodiment, only the weights of solid immersion lens 3 and first holder 8 themselves act on the observation position of semiconductor device S and the application of an excessive pressure is thus eliminated. Damaging of semiconductor device S can thus be prevented. Also, solid immersion lens 3 is put in close contact in conformance (compliance) with the observation position and yet temperature drifts at the second holder 9 side or the semiconductor device S side are cut off from the counterpart side and thus the influences of such temperature drifts are eliminated. High-precision observation is thus enabled without peeling off of solid immersion lens 3 from the observation position.

Also, with solid immersion lens manipulator 30 of the present embodiment, solid immersion lens 3 is moved to predetermined positions within the X-Y plane by rotation of first and second arm members 71 and 73. There is thus no need to make the component parts long in the orthogonal X and Y directions, and a simple arrangement that occupies a small area is provided. Compactness of device can thus be realized while realizing low cost.

Also, with electronic device inspection device 1, equipped with this solid immersion lens manipulator 30, when both an observation image, which is taken in the normal state in which solid immersion lens 3 is not set between semiconductor device S and objective lens 20, and a magnified observation image, which is taken in the state in which solid immersion lens 3 is inserted, are to be acquired, these images can be acquired readily. Also, in this case, since high resolution observation is carried out by the magnified observation image, inspection using electronic device inspection device 1 can be carried out readily and with high precision.

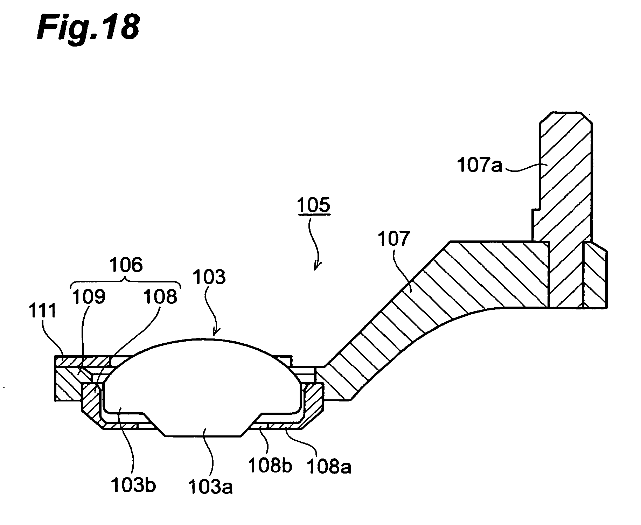

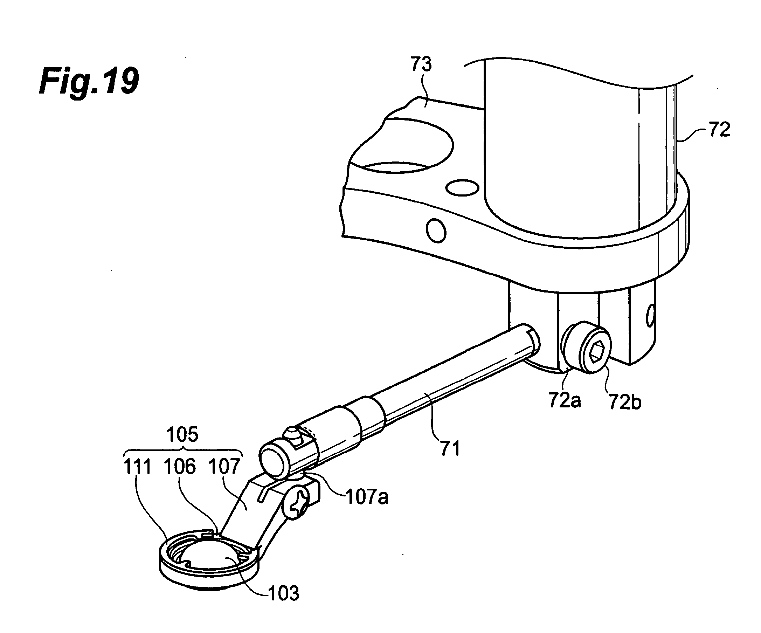

Fig. 17 is a perspective view showing a solid immersion lens holder used in another embodiment of this invention, and Fig. 18 is a vertical section showing the solid immersion lens holder in the state in which a lens is set at a closely contacting position. Also, Fig. 19 is a perspective view showing a part at which the solid immersion lens holder and a solid immersion lens moving device are connected. As shown in Fig. 17 and Fig. 18, solid immersion lens holder 105 is equipped with a holder 106 formed to a substantially cylindrical form, which supports solid immersion lens 103, and an arm part 107, which holds this holder 106.

As shown in Fig. 18, holder 106 is equipped with a lower holder 108 and an upper holder 109. Of these, upper holder 109 is arranged as an annular part that is formed integral to arm part 107. Lower holder 108, for supporting solid immersion lens 103, is supported by arm part 107 via this upper holder 109. These holders 108 and 109 are formed to substantially cylindrical forms so as not to obstruct the optical path with respect to semiconductor device S.

Solid immersion lens 103 is arranged to have a shape wherein a central part 103a of the bottom surface thereof protrudes downward with respect to a peripheral part 103b thereof. With the present embodiment, the outer peripheral surface of the protruding central part 103a has a tapered shape that decreases in outer diameter towards the lower side.

Holder 108 is formed to a substantially cylindrical form and is equipped with an annular collar part 108a, which is directed inwards, at the bottom surface thereof. Peripheral part 103b of solid immersion lens 103 is set on annular collar part 108a of holder 108 in the state in which the bottom surface of the protruding central part 103a of solid immersion lens 103 protrudes downward from an opening 108b formed in the inner periphery of annular collar part 108a, and solid immersion lens 103 is thereby supported in the gravity direction by holder 108.

Also, a cap 111 is provided above holders 108 and 109. By this cap 111, the falling-off of solid immersion lens 103 from holders 108 and 109 is prevented without obstruction of the optical path with respect to semiconductor device S. Cap 111 of the present embodiment has an annular form and has an arrangement having a plurality of claw parts (three claw parts in the figure) that protrude towards the inner side.

Also, arm part 107 is formed of a plate-like member that extends outward from upper holder 109, with one end thereof being directed obliquely upward and the other end thereof being integrated with upper holder 109 as mentioned above. As shown in Fig. 17 and Fig. 18, a rotation stopping part 107a, which extends vertically upwards and with which a part of its side face is made a flat surface, is fixed to the one end of arm part 107 as a rotation stop for arm part 107 and holder 106.

As shown in Fig. 19, arm part 107, which makes up solid immersion lens holder 105, is connected to one end of first arm member 71 of solid immersion lens manipulator 30. Furthermore with the present embodiment, first arm member 71 of solid immersion lens manipulator 30 is arranged to be detachably attachable to first arm member rotation source 72. In the arrangement example shown in Fig. 19, first arm member 71 is detachably connected to rotation axis 72a of first arm member rotation source 72 by means of a hexagon socket head bolt 72b.

With such a solid immersion lens holder 105, though processing is required of solid immersion lens 103, since only the self-weight of solid immersion lens 103 acts on semiconductor device S, the merit that it is even more unlikely for an excessive pressure to be applied to semiconductor device S is provided.

Also, with the above-described embodiment, first arm member 71, to which solid immersion lens holder 105 is connected, is arranged to be detachably mounted to first arm member rotation source 72. By thus making first arm member rotation source 72, of comparatively high rigidity, an attachable/detachable part, the occurrence of deformation of first arm member 71 or arm part 107 of solid immersion lens holder 105 is prevented and these members are thus improved in durability. Also in performing observation of a sample by means of solid immersion lens 103, the parallelism of the observed object and solid immersion lens 103 can be maintained favorably.

Also with an arrangement wherein first arm member 71 is mounted to first arm member rotation source 72 by means of a bolt, etc., as shown in Fig. 19, the attachment/detachment work can by performed using a hexagonal wrench or other tool. The handling of the device, for example, in exchanging solid immersion lens 103 along with first arm member 71 and solid immersion lens holder 105, etc., is thus facilitated.

Also with the above-described embodiment, a part of holder 106 is arranged from upper holder 109, which is an annular part that is integral to arm part 107. The rigidity of solid immersion lens holder 105 can thereby be improved. Also, the positioning of the arm part and the annular holder part of the solid immersion lens holder (especially the positioning in the rotation direction) is made unnecessary. With such an arrangement, the entirety of holder 106 may be arranged from an annular part that is integral to arm part 107.

Also, arm part 107 is made to have a shape that extends obliquely upward from holder 106. Since space at the side of solid immersion lens 103 can thus be secured, observation of a sample can be carried out favorably. For example, in a case of inspecting a plastic molded type IC, since steps are formed at the surroundings of inspected positions due to mold cutting, the range in which the solid immersion lens holder can be moved is restricted. However, with the above arrangement wherein arm part 107 is made oblique, interference between the steps of the observed object and the arm part of the solid immersion lens holder can be lessened and observation of the observed object using the solid immersion lens can thus be carried out favorably.

With solid immersion lens holder 105 of the above-described arrangement, lower holder 108, having annular collar part 108a, may be made of the same or a similar material as that of upper holder 109 and arm part 107 or may be formed by processing a water absorbing structure, such as a water absorbing ceramic. By applying a water absorbing structure to the holder, the merit that, when an excessive amount of optical contact liquid is applied, the time for drying the liquid and bringing the solid immersion lens and the observed object into close contact optically can be shortened is provided.

Fig. 20 is a perspective view showing another solid immersion lens holder and Fig. 21 is a vertical section showing this other solid immersion lens holder in the state wherein a lens is positioned at a closely contacting position. With this solid immersion lens holder 64, holder 65, which makes up solid immersion lens holder 64, is formed to have a cylindrical form and the inner diameter thereof is made large in comparison to the outer diameter of solid immersion lens 3. Solid immersion lens 3 is positioned in the inner periphery of holder 65 with the bottom surface of this solid immersion lens 3 protruding from an opening at the bottom surface of holder 65.

With such a solid immersion lens holder 64, solid immersion lens 3 is moved to a desired observation position by being moved in a sliding manner across semiconductor device S while being hitched onto the inner peripheral surface of holder 65 of solid immersion lens holder 64, which moves within the X-Y plane. Solid immersion lens holder 64 is then moved in the Z-direction and then solid immersion lens holder 64 is furthermore moved within the X-Y plane, thus leaving solid immersion lens 3 on the observation position of semiconductor device S while solid immersion lens holder 64 is moved away from solid immersion lens 3. The merit that observation can be carried out upon moving all component parts away from the view field of the observation position of semiconductor device S is thereby provided.

Though the present invention has been described specifically based on the embodiments above, this invention is not limited to the above-described embodiments, and various modifications are possible. For example, though with an above-described embodiment, holder 9 for supporting solid immersion lens 3 is formed to have a cylindrical form as an especially preferable form, this holder may instead be a flat plate equipped with opening 9b.

Also with an above-described embodiment, solid immersion lens manipulator 30 is enabled to move solid immersion lens 3 in the Z-direction to thereby enable solid immersion lens 3 to be moved freely to desired positions in three-dimensional directions by a simple arrangement. However, Z-direction movement source 75 may be eliminated so that the lens manipulator is enabled to move only within the X-Y plane and movement in the Z-direction may be accomplished by means of X-Y-Z stage 15, or stage 18, on which semiconductor device S is set, may be enabled to move in the Z-direction. In such cases, the position at which solid immersion lens 3 is inserted by solid immersion lens manipulator 30 is deemed to be the closely contacting position.

Also, though with the above-described embodiments, a semiconductor device, formed of a semiconductor substrate, is used as an example of the observed object, this invention is not limited thereto, and the observed object may be an electronic device with, for example, a glass or plastic substrate. In this case, glass or plastic is preferably used as the material of the solid immersion lens.

Specifically, though with the above-described embodiments, the observed sample is a semiconductor device, generally when semiconductor devices and various other types of electronic devices are used as samples, the device to be observed is not limited to that which uses a semiconductor substrate, and the observed object may be an integrated circuit, such as a polysilicon thin film transistor that has glass or plastic, etc., as the substrate. For example, with a liquid crystal device, the device is prepared on a glass substrate, and with an organic EL, the device is prepared on a plastic substrate. As even more general samples, biological samples using prepared slides, etc., can be cited in addition to the abovementioned semiconductor devices, liquid crystal devices, and various other types of devices.

Also, though with each of the above-described embodiments, application to inspection device 1 for semiconductor device S is described as an especially effective application, this invention is not limited thereto and may be applied, for example, to an optical observation device, etc., for performing inspection of an optical recording medium as an observed object, as described in Japanese Patent Application Laid-Open No. H11-305135.

Also, the above-described solid immersion lens moving device is generally applicable to a microscope for observing a sample and obtaining internal information on the sample. In this case, the microscope comprises an optical system, including an objective lens, onto which light from a sample is made incident, and guiding an image of the sample, and the solid immersion lens moving device, and it is sufficient that the solid immersion lens moving device be arranged to move the solid immersion lens between an inserted position, which contains an optical axis from the sample to the objective lens, and a standby position, which is located away from the optical axis. Also, as mentioned above, the microscope may have an arrangement equipped with an image acquisition means for acquiring an image of the sample that is to be the observed object. In this case, the optical system is arranged to guide the image of the sample to the image acquisition means.

Also, though with each of the above-described embodiments, a predetermined position of the lower surface of the observed object (surface of semiconductor device S) is observed and solid immersion lens 3 is used so that the focal point is set at a predetermined position of the lower surface of the observed object, this invention is not limited thereto, and in cases where the interior or upper surface of an observed object is to be observed, a solid immersion lens may be used to set the focal point in the interior or at the upper surface of the observed object as described, for example, in Japanese Patent Application Laid-Open No. 2001-189359.

### Industrial Applicability

The present invention can be applied as a solid immersion lens moving device, with which compactness can be realized while realizing low cost, and a microscope equipped with the same. Namely, as described above, with this invention's solid immersion lens moving device, since the solid immersion lens is moved to desired positions within the X-Y plane by the rotation of two arm members, thus providing a simple arrangement that occupies a small area with which there is no need to make the component parts long in the orthogonal X and Y directions, compactness of the device can be achieved while realizing low cost. Also with a microscope or an electronic device inspection device equipped with this solid immersion lens moving device, since in addition to providing the effects of the solid immersion lens moving device, both an observation image and a magnified observation image can be acquired readily when both types of images are required and since high-resolution observation is enabled by the magnified observation image, electronic device inspection and other forms of sample observation can be carried out readily and yet at high precision.

## Claims

1. A solid immersion lens moving device (30), moving a solid immersion lens (3) within an X-Y plane that is substantially parallel to an observed object, **characterised by**:
a first arm member (71), being connected to a solid immersion lens holder (5, 64) that supports said solid immersion lens (3);
a first arm member rotation source (72), rotating said first arm member (71) within said X-Y plane;
a second arm member (73), holding said first arm member rotation source (72); and
a second arm member rotation source (74), having a rotation axis (74a) at a position that is non-coaxial to the rotation axis of said first arm member rotation source and rotating said second arm member within said X-Y plane.

2. The solid immersion lens moving device according to Claim 1, further comprising a Z-direction movement source for moving said second arm member rotation source in a Z-direction that is orthogonal to said X-Y plane.

3. The solid immersion lens moving device according to Claim 1, further comprising an optical coupling material supplying means, supplying an optical coupling material for optically coupling said solid immersion lens to said observed object.

4. The solid immersion lens moving device according to Claim 3, further comprising a drying gas supplying means, supplying a gas for drying said optical coupling material.

5. The solid immersion lens moving device according to Claim 1, wherein said solid immersion lens holder is equipped with an outwardly extending arm part,
said arm part being detachably connected to the first arm member.

6. The solid immersion lens moving device according to Claim 1, wherein said first arm member is detachably connected to said first arm member rotation source.

7. The solid immersion lens moving device according to Claim 1, wherein said second arm member is arranged to have a curved form.

8. The solid immersion lens moving device according to Claim 1, wherein said solid immersion lens holder is formed to have a cylindrical form, of which the inner diameter is large in comparison to the outer diameter of the solid immersion lens, and
said solid immersion lens is positioned within the inner periphery of said solid immersion lens holder with the bottom surface of said solid immersion lens protruding from an opening in the bottom surface of said solid immersion lens holder.

9. A solid immersion lens moving device comprising: a microscope, for observing said observed object through said solid immersion lens, wherein
the solid immersion lens moving device according to Claim 1 is detachably mounted to said microscope.

10. A microscope, for performing observation of a sample in order to obtain internal information on the sample, comprising:
an optical system, including an objective lens, onto which light from said sample is made incident, and guiding an image of said sample; and
the solid immersion lens moving device according to Claim 1; wherein
said solid immersion lens moving device moves said solid immersion lens between an inserted position, which contains an optical axis from said sample to said objective lens; and a standby position, which is located away from said optical axis.

## Patentansprüche

1. Festkörper-Immersionslinsen-Bewegungsvorrichtung (30),
welche eine Festkörper-Immersionslinse (3) innerhalb einer X-Y-Ebene bewegt, welche zu einem beobachteten Objekt im Wesentlichen parallel ist,
**gekennzeichnet durch**:
ein erstes Armelement (71), das mit einem Festkörper-Immersionslinsen-Halter (5, 64), welcher die Festkörper-Immersionslinse (3) trägt, verbunden ist;
eine Drehquelle (72) für das erste Armelement, welche das erste Armelement (71) innerhalb der X-Y-Ebene dreht;
ein zweites Armelement (73), welches die Drehquelle (72) für das erste Armelement hält; und
eine Drehquelle (74) für das zweite Armelement, welche eine Drehachse (74a) an einer Position aufweist, die nicht-koaxial zu der Drehachse der Drehquelle für das erste Armelement ist, und welche das zweite Armelement innerhalb der X-Y-Ebene dreht.

2. Festkörper-Immersionslinsen-Bewegungsvorrichtung nach Anspruch 1, ferner umfassend eine Z-Richtung-Bewegungsquelle zum Bewegen der Drehquelle für das zweite Armelement in einer zu der X-Y-Ebene orthogonalen Z-Richtung.

3. Festkörper-Immersionslinsen-Bewegungsvorrichtung nach Anspruch 1, ferner umfassend Bereitstellungsmittel für ein optisches Kopplungsmaterial zur Bereitstellung eines optischen Kopplungsmaterials zur optischen Kopplung der Festkörper-Immersionslinse an das beobachtete Objekt.

4. Festkörper-Immersionslinsen-Bewegungsvorrichtung nach Anspruch 3, ferner umfassend Bereitstellungsmittel für ein Trockengas zur Bereitstellung eines Gases zum Trocknen des optischen Kopplungsmaterials.

5. Festkörper-Immersionslinsen-Bewegungsvorrichtung nach Anspruch 1, wobei der Festkörper-Immersionslinsen-Halter mit einem sich nach außen erstreckenden Armteil ausgerüstet ist,
wobei das Armteil mit dem ersten Armelement lösbar verbunden ist.

6. Festkörper-Immersionslinsen-Bewegungsvorrichtung nach Anspruch 1, wobei das erste Armelement mit der Drehquelle für das erste Armelement lösbar verbunden ist.

7. Festkörper-Immersionslinsen-Bewegungsvorrichtung nach Anspruch 1, wobei das zweite Armelement so angeordnet ist, dass es eine gebogene Form aufweist.

8. Festkörper-Immersionslinsen-Bewegungsvorrichtung nach Anspruch 1, wobei der Festkörper-Immersionslinsen-Halter so gebildet ist, dass er eine zylindrische Form aufweist, von welcher der Innendurchmesser im Vergleich zum Außendurchmesser der Festkörper-Immersionslinse groß ist, und
wobei die Festkörper-Immersionslinse innerhalb des Innenumfanges des Festkörper-Immersionslinsen-Halters aufgestellt ist, wobei die Bodenfläche der Festkörper-Immersionslinse aus einer Öffnung in der Bodenfläche des Festkörper-Immersionslinsen-Halters vorsteht.

9. Festkörper-Immersionslinsen-Bewegungsvorrichtung umfassend:
ein Mikroskop zum Beobachten des beobachteten Objektes durch die Festkörper-Immersionslinse,
wobei die Festkörper-Immersionslinsen-Bewegungsvorrichtung nach Anspruch 1 lösbar an dem Mikroskop angebracht ist.

10. Mikroskop zur Durchführung einer Beobachtung einer Probe, um interne Informationen zur Probe zu erhalten, umfassend:
ein optisches System, welches eine Objektivlinse umfasst, auf welche Licht von der Probe fällt, und welches eine Abbildung der Probe weiterleitet, und die Festkörper-Immersionslinsen-Bewegungsvorrichtung nach Anspruch 1, wobei die Festkörper-Immersionslinsen-Bewegungsvorrichtung die Festkörper-Immersionslinse zwischen einer Einfügeposition, welche eine optische Achse von der Probe zur Objektivlinse umfasst, und einer Ruheposition, welche von der optischen Achse entfernt angeordnet ist, bewegt.

## Revendications

1. Dispositif (30) de déplacement de lentille à immersion solide déplaçant une lentille à immersion solide (3) dans un plan X-Y qui est sensiblement parallèle à un objet observé, **caractérisé par**
un premier élément de bras (71) étant relié à un support (5, 64) de lentille à immersion solide qui soutient ladite lentille à immersion solide (3) ;
une source de rotation (72) de premier élément de bras, mettant en rotation ledit premier élément de bras (71) dans ledit plan X-Y ;
un deuxième élément de bras (73) soutenant ladite source de rotation (72) de premier élément de bras ; et
une source de rotation (74) de deuxième élément de bras, ayant un axe de rotation (74a) à une position qui n'est pas coaxiale avec l'axe de rotation de ladite source de rotation de premier élément de bras et mettant en rotation ledit deuxième élément de bras dans ledit plan X-Y.

2. Dispositif de déplacement de lentille à immersion solide selon la revendication 1, comprenant en outre une source de déplacement dans une direction Z pour déplacer ladite source de rotation de deuxième élément de bras dans une direction Z qui est orthogonale audit plan X-Y.

3. Dispositif de déplacement de lentille à immersion solide selon la revendication 1, comprenant en outre un moyen d'alimentation d'un matériau de couplage optique, fournissant un matériau de couplage optique pour coupler optiquement ladite lentille à immersion solide audit objet observé.

4. Dispositif de déplacement de lentille à immersion solide selon la revendication 3, comprenant en outre un moyen d'alimentation en gaz de séchage, fournissant un gaz pour sécher ledit matériau de couplage optique.

5. Dispositif de déplacement de lentille à immersion solide selon la revendication 1, dans lequel ledit support de lentille à immersion solide est équipé d'une partie de bras s'étendant vers l'extérieur,
ladite partie de bras étant reliée au premier élément de bras de manière amovible.

6. Dispositif de déplacement de lentille à immersion solide selon la revendication 1, dans lequel ledit élément de bras est relié de manière amovible à ladite source de rotation de premier élément de bras.

7. Dispositif de déplacement de lentille à immersion solide selon la revendication 1, dans lequel ledit deuxième élément de bras est agencé de sorte à avoir une forme incurvée.

8. Dispositif de déplacement de lentille à immersion solide selon la revendication 1, dans lequel ledit support de lentille à immersion solide est réalisé sous forme cylindrique, dont le diamètre intérieur est important en comparaison avec le diamètre extérieur de la lentille à immersion solide, et
ladite lentille à immersion solide est positionnée dans la périphérie intérieure dudit support de lentille à immersion solide la surface de fond de ladite lentille à immersion solide faisant saillie d'une ouverture dans la surface de fond dudit support de lentille à immersion solide.

9. Dispositif de déplacement de lentille à immersion solide comprenant :
un microscope, pour observer ledit objet observé à travers ladite lentille à immersion solide, où
le dispositif de déplacement de lentille à immersion solide selon la revendication 1 est monté de manière amovible audit microscope.

10. Microscope, destiné à l'observation d'un échantillon afin d'obtenir des informations intérieures concernant l'échantillon, comprenant :
un système optique, comportant une lentille de focalisation, sur laquelle la lumière provenant dudit échantillon est incidente, et guidant une image dudit échantillon ; et
le dispositif de déplacement de lentille à immersion solide selon la revendication 1 ;
où
ledit dispositif de déplacement de lentille à immersion solide déplace ladite lentille à immersion solide entre une position insérée, qui contient un axe optique dudit échantillon à ladite lentille de focalisation ; et une position de repos, qui est située loin dudit axe optique.
